# EUROPEAN PATENT SPECIFICATION

(11) **EP 2 573 052 B1**
(45) Date of publication and mention of the grant of the patent: **22.06.2016**
(21) Application number: 11783687.4
(22) Date of filing: 06.04.2011
(51) Int. Cl.: C02F 1/461, C25B 9/06

(54) **ION WATER DEVICE**
VORRICHTUNG FÜR IONISIERTES WASSER
DISPOSITIF À EAU IONISÉE

(30) Priority: 17.05.2010 KR 20100045882
(43) Date of publication of application: 27.03.2013
(73) Proprietor: Ionfarms Co., Ltd., Incheon 403-030 (KR)
(72) Inventor: SIN, Jong-Ho, Seongnam-si Gyeonggi-do (KR)
(74) Representative: Chamberlain, Alan James
(86) International application number: PCT/KR2011/002344
(87) International publication number: WO 2011/145805

(56) References cited:
- JP-A- H11 100 688
- JP-A- H11 221 566
- KR-A- 20020 072 193
- KR-A- 20050 034 396
- KR-B1- 100 523 982
- KR-B1- 100 634 760
- US-A- 5 993 618
- US-A1- 2007 131 541

## Description

### Technical Field

The present invention relates to a water ionization device.

### Backaround Art

Ion water devices produce alkaline water and acidic water, which are produced by means of an electrolysis procedure using raw water.

The above ion water device is formed of two electrolysis cells separated by an ion partition allowing only ions to pass through, and an electrolysis electrode disposed at each electrolysis cell.

The conventional ion water device is bulky and is a fixed type, so it is hard to carry.

The conventional ion water device with the above-mentioned features is directed to selectively using alkaline water or acidic water depending on a user's necessity, and most of the non-selected alkaline water or acidic water is discharged, which results in a problem that water is over consumed.

Molten solid substances such as calcium, magnesium, etc. contained in water might attach on the electrodes during the ionization procedure of raw water or ion partitions might be clogged and damaged.

US 5,993,618 discloses a device for generating oxygen or a mixture of ozone and oxygen from high-purity water by means of an electrochemical cell in which a buffer vessel is provided for the high-purity water. The high-purity water can be supplied from the buffer vessel to the electrochemical cell through a feed line. Oxygen or ozone and oxygen as well as high-purity water is guided from the anode chamber of the cell through a drain line directly into the buffer vessel. A feed line for the oxygen or mixture of ozone and oxygen comes out from the buffer vessel, possibly with the addition of high-purity water, to a consumer.

### Disclosure of Invention

Accordingly, it is an object of the present invention to provide an ion water device which makes it possible to resolve the problems encountered in the conventional art in which the conventional ion water device formed of two electrolysis cells divided by an ion partition has a complicated construction, and it is hard to carry, and only one ion water between produced alkaline water and acidic water is used, and the other one between them is discarded, thus increasing the consumption of water, and the electrodes and ion partitions might be damaged by the dissolved solid substances.

To achieve the above objects, there is provided a water ionization device as described in claim 1 below.

### Advantageous effects

The present invention is characterized in that there is provided an ionization electrode part in which a cathode comes into contact with raw water in an ionization container formed of one electrolysis cell in an ion water device, so the structure of the water ionization device is simplified, and it is easy to carry, and the loss of the raw water is minimized during the manufacture of ion water, and the ion water can be selectively used by a user based on a user's selection, so the functionality is enhanced.

### Brief Description of Drawings

The present invention will become better understood with reference to the accompanying drawings which are given only by way of illustration and thus are not limitative of the present invention, wherein;
Figure 1 is a disassembled perspective view of an ion water device.
Figure 2 is an assembled perspective view of the ion water device.
Figure 3 is a cross sectional view of the ion water device.
Figure 4 is a cross sectional view illustrating a construction that an insulated coating layer is formed at a surface of an externally contacting electrode of an ionization electrode part.
Figure 5 is a lateral cross sectional view illustrating a construction that an ozone degradation part is formed of an ozone degradation catalyst.
Figure 6 is a cross sectional view illustrating a construction that an ozone degradation part is formed of an active carbon.
Figures 7 through 9 are perspective views illustrating the construction that an ionization electrode part is formed in a cylindrical shape according to an embodiment of the present invention.
Figures 10 through 12 are perspective views illustrating the construction that an ionization electrode part is formed in a circular plate shape.
Figure 13 is a view illustrating a construction that an ionization container is formed of a kettle.

### Best Modes for carrying out the invention

The preferred embodiments of the present invention will be described in details with reference to the accompanying drawings.

The present invention is directed to minimizing the loss of raw water during a manufacture of ion water while making an ion water device easy to carry, and the damages of an electrode and an ion partition due to the dissolved slid substances contained in the raw water can be prevented.

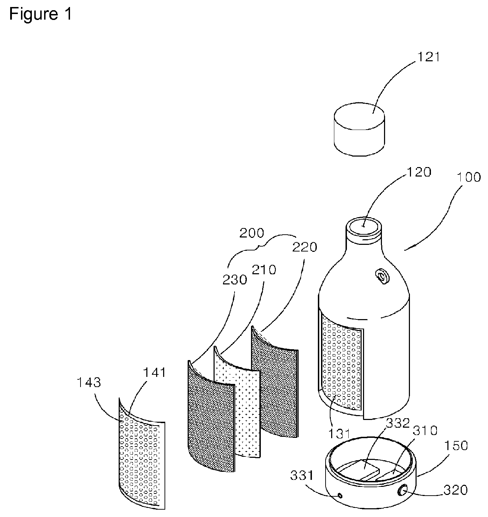

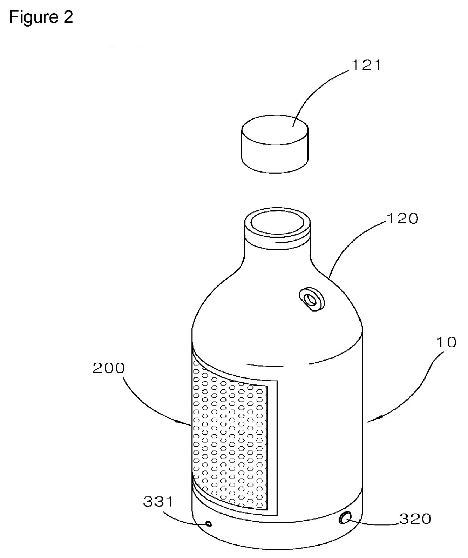

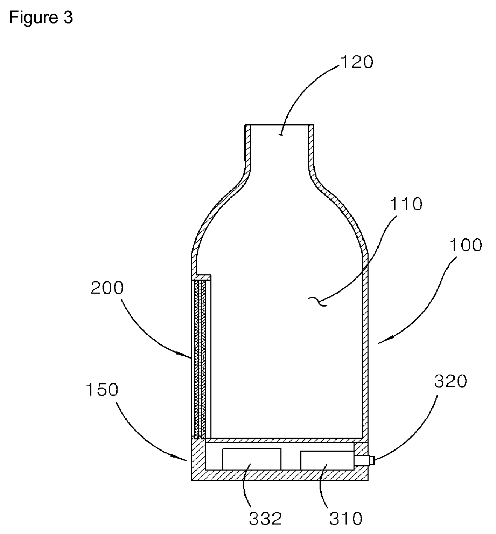

As shown in Figures 1 through 3, the ion water device comprises an ionization container 100 which has a certain volume enough to store raw water for ionization and forms an ionization chamber 110; an ionization electrode part 200 which is provided at one side of the ionization container 100 and is constituted in such a way that either an anode or a cathode can come into direct contact with the raw water; an ion water control part 310 which is provided at one side of the ionization container 100 for thereby controlling the ionization electrode part 200; a manipulation part 320 which is provided at one side of the ionization container 100 so that a user's manipulation signal can be inputted into the ion water control part 310; and an electric power part which is provided at one side of the ionization container for thus supplying electric power to the ionization electrode part 200 in accordance with a control of the ion water control part 310.

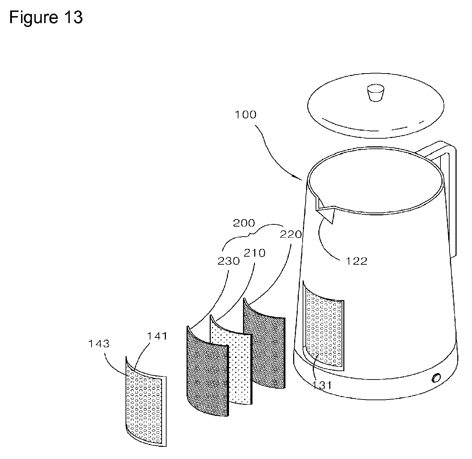

The ionization container (100) has an outlet part (120) having a lid (121), the outlet part having has an open at its upper side to receive raw water and discharge ion water, its outer shape being selected from the group consisting of a cylindrical bottle shape, a rectangular bottle shape, a bucket shape and a kettle shape as shown in Figure 13, which kettle has an outlet port 122.

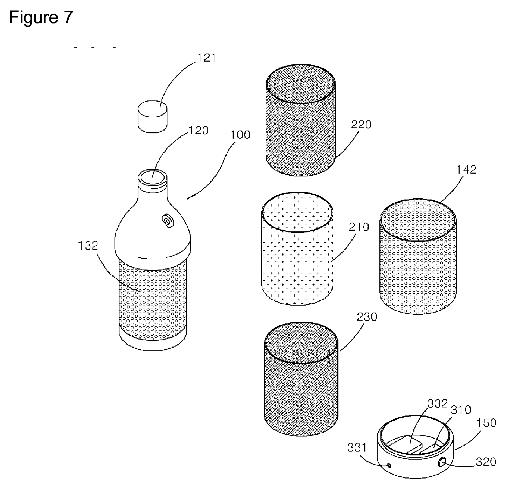

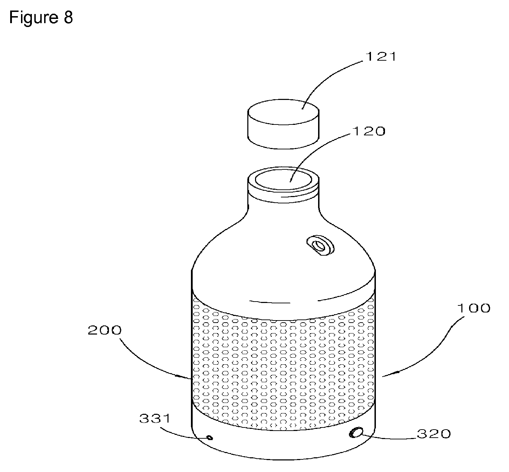

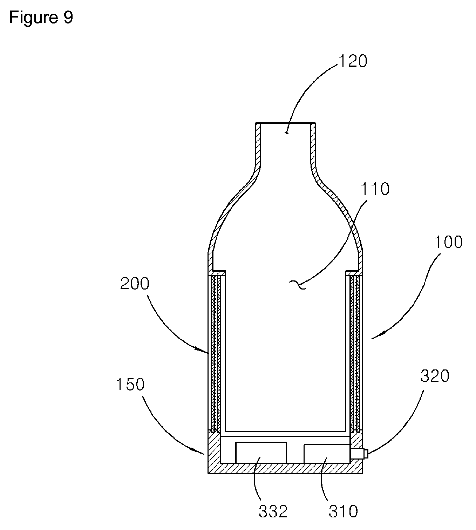

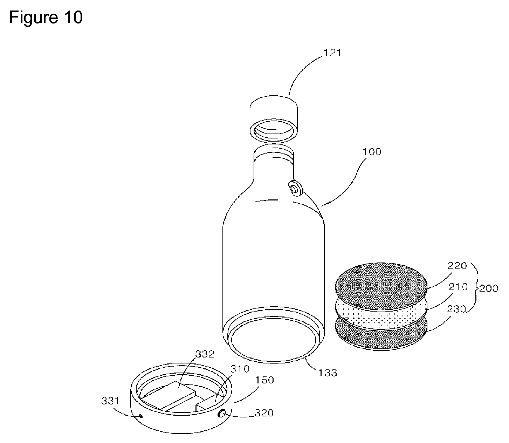

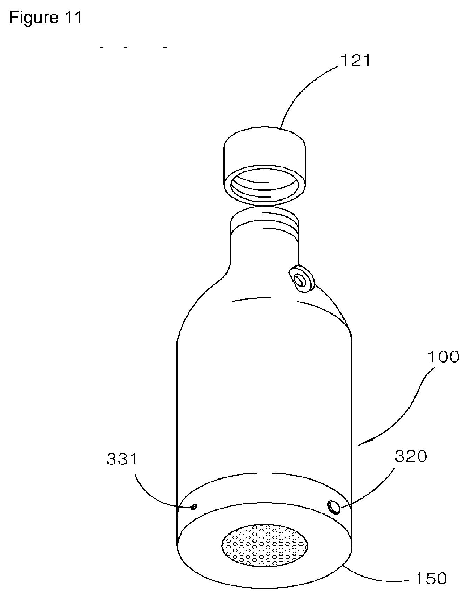

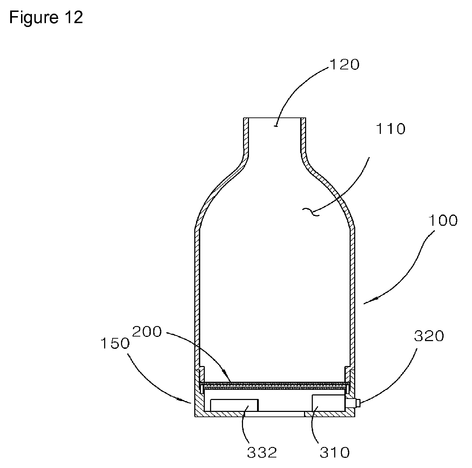

The ionization electrode part 200, which is formed in a shape selected from the group consisting of a rectangular plate shape as shown in Figures 1 to 3, a cylindrical shape as shown in Figures 7 to 9 and a circular plate shape as shown in Figures 10 to 12, which comprises a raw water contact electrode 220 which is engaged coming into close contact with one side of an ion partition 210 formed of either a proton exchange membrane or a polymer electrolyte membrane which allow only ion substances to pass through and comes into contact with the raw water, thus allowing the ion substances to pass through; and an externally exposed electrode 230 which is engaged coming into close contact with the ion partition 210 at the opposite side of the raw water contact electrode 220 and is externally exposed and is constituted to allow oxygen and ozone or hydrogen gas produced during the ionization procedure to pass through.

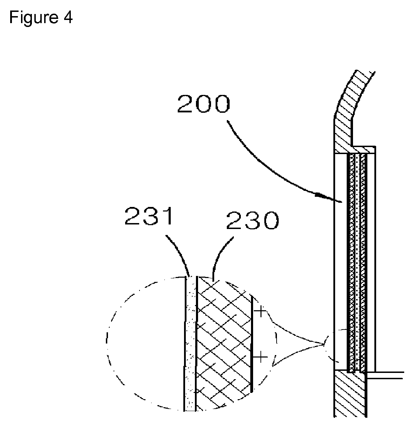

The raw water contact electrode 220 and the externally exposed electrode 230 each are formed of either a net shaped plate or a porous plate. As shown in Figure 4, an insulated coating layer 231 is formed at an outer surface of the externally exposed electrode 230 for preventing oxidation and electric leakage.

As shown in Figures 1 through 3, the ionization electrode part 200 is configured in such a way that a rectangular plate shaped electrode installation part 131 is formed at a lateral wall of one side or at a lateral wall of both sides of the ionization container 100, and a rectangular plate-shaped ionization electrode part 200 is coupled to the rectangular plate shape electrode installation part 131, and a rectangular plate shaped electrode cover 141 is covered so that the ionization electrode part 200 coupled to the rectangular plate shaped electrode installation part 131 is not exposed, and has a ventilation hole 143 for the exhaust of the gas.

As shown in Figure 7 to 9, the ionization electrode part 200 is configured in such a way that a cylindrical electrode installation part 132 is provided at an outer surface the ionization container 100, and the cylindrical ionization electrode part 200 is inserted into the cylindrical electrode installation part 132, and a cylindrical electrode cover 142 is covered so that an outer surface of the ionization electrode part 200 coupled to the cylindrical electrode installation part 132 is not exposed, and has a ventilation hole 143 for the exhaust of gas.

In addition, as shown in Figure 10 to 12, the ionization electrode part 200 is configured in such a way that a circular plate shaped electrode installation part 133 is formed at a lower side of the ionization part 100, and a circular plate shaped electrode part 200 is coupled to the circular plate shaped electrode installation part 133.

In addition, an ozone degradation chamber 410 is formed at the side of the externally exposed electrode 230 in order for the ozone to be degraded to oxygen, the ozone being contained in the oxygen discharged via the externally exposed electrode 230 when ion water is used as alkaline water, and an ozone degradation means is provided at the ozone degradation chamber 410.

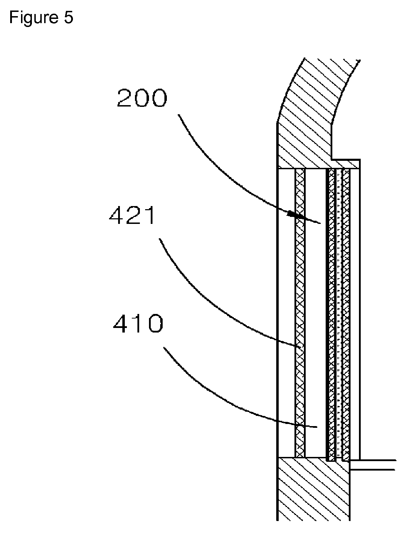

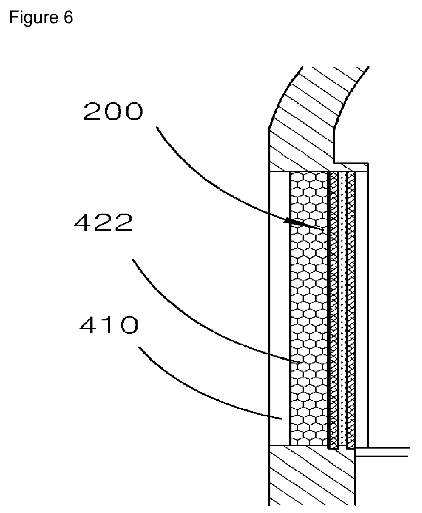

The ozone degradation means is formed of either an ozone degradation catalyst 421 formed of manganese oxide and lead compound as shown in Figure 5 or an active carbon 422 which adsorbs ozone for thereby naturally degrading as time passes as shown in Figure 6.

The electric power part might be formed of an external electric power part 331 connecting an external electric power or a battery 332 formed of a primary battery or a secondary battery in the interior.

The electric power part, the ion water control part 310 and the manipulation part 320 are preferably provided at a container rest 150 of the ionization container 100, which container rest is coupled to a lower side of the ionization container 100, and the container rest 150 might be spirally engaged or engaged using screws.

The ionization of raw water by means of the ion water control part 10 might be time-controlled depending on the capacity of the ionization container 100 or might be implemented by including an ion sensor which senses alkaline or acidic properties.

The ion water device comprises an ionization container 100 which has a certain volume enough to store raw water for ionization and forms an ionization chamber 110; an ionization electrode part 200 which is provided at one side of the ionization container 100 and is constituted in such a way that either an anode or a cathode can come into direct contact with the raw water; an ion water control part 310 which is provided at one side of the ionization container 100 for thereby controlling the ionization electrode part 200; a manipulation part 320 which is provided at one side of the ionization container 100 so that a user's manipulation signal can be inputted into the ion water control part 310; and an electric power part which is provided at one side of the ionization container for thus supplying electric power to the ionization electrode part 200 in accordance with a control of the ion water control part 310. With the above construction, the structure of the construction is simplified now that it is possible to manufacture in a cylindrical bottle shape, and it is easy to carry.

When a user wants to use alkaline water, a user manipulates the manipulation part 320 and inputs a manipulations signal so that the ion water control part 310 can control for the raw water contact electrode 220 of the ionization electrode part 200 to be a cathode.

At this time, when the manipulation signal generated as the user manipulates the manipulation part 320, the raw water is electrolysis-processed by means of the ionization electrode part 200 is ionized.

The oxygen ions negative-ionized from the raw water ionized by the ionization electrode part passes through the ion partition 210 and move to the externally exposed electrode 230 formed of anode, thus emitting electrons, and become oxygen and are emitted into the air. The hydrogen ion contained in the raw water take electrons from the raw water contact electrode 220 formed of cathode and change to active hydrogen and become alkaline water as the concentration of the hydroxyl ion relatively increases.

The ozone contained in the oxygen discharged to the externally exposed electrode 230 during the production of alkaline water are degraded, so the ozone which might cause bad influence is degraded, thus enhancing safety.

When it is needed to produce acidic water, when a manipulation signal is inputted by manipulating the manipulation part 320 so that the ion water control part 310 controls for the raw water contact electrode 220 of the ionization electrode part 200 to be formed of anode, the raw water contact electrode 220 formed of anode continues to generate hydrogen ion and oxygen into the raw water. Part of the hydrogen ion generated by means of the raw water contact electrode 220 passes through the ion partition 210, and moves to the externally exposed electrode 230 formed of cathode and are converted into hydrogen and are emitted into the air and becomes acidic water as the concentration of hydrogen ion increases. Here, the acidic water can be used for the purpose of beauty like a face wash or the purpose of cleaning like sterilization and disinfection.

### Industrial applicability

As described above, the ion water device is provided with an ionization electrode part coming into direct contact with only one electrode between an anode and a cathode in the ionization container formed of one electrolysis cell, so that the structure of the ion water device is simplified, and it is easy to carry, and the loss of raw water can be minimized during the production of ion water, and the ion water can be selectively used depending on a user's selection, and the functionality can be enhanced.

An ozone degradation part is provided so it is possible to prevent harmfulness by degrading a small amount of ozone which might produce during the process of alkaline water production.

## Claims

1. A water ionization device, comprising:
a cylindrical ionization container (100) comprising an ionization chamber (110) which has a predetermined volume for storing raw water for ionization, the ionization container (100) having: an outlet port (120) the top of which is open to receive raw water and to discharge ionized water and which has a lid (121); and a cylindrical electrode installation part (132) provided at an outer surface of the ionization container (100);
a cylindrical ionization electrode part (200) inserted into the cylindrical electrode installation part (132) and constituted in such a way that a cathode electrode can come into direct contact with the raw water, the ionization electrode part (200) comprising:
an ion partition (210) which is formed of either a proton exchange membrane or a polymer electrolyte membrane which allows only ionized substances to pass through;
a raw water contact electrode (220) which is engaged coming into close contact with one side of the ion partition (210) and comes into contact with the raw water, thus allowing the ionized substances to pass through; and
an externally exposed electrode (230) which is engaged coming into close contact with the ion partition (210) at the opposite side to the raw water contact electrode (220) and is externally exposed and is constituted to allow oxygen and ozone produced during the ionization procedure to pass through, the raw water contact electrode (220) and the externally exposed electrode (230) each being formed of either a net-shape plate or a porous plate;
an insulated coating layer (231) which is coated on an outer surface of the externally exposed electrode (230) so as to prevent oxidation and electric leakage;
a cylindrical electrode cover (142) provided so that an outer surface of the ionization electrode part (200) coupled to the cylindrical electrode installation part (132) is not exposed, the cylindrical electrode cover (142) having a ventilation hole (143) for the exhaust of gas;
an ozone degradation chamber (410) formed inside the cylindrical electrode cover (142) at the side of the externally exposed electrode (230) and configured to degrade into oxygen the ozone which is discharged via the externally exposed electrode (230) during an ionization procedure, the ozone degradation chamber (410) having an ozone degradation means formed of an ozone degradation catalyst (421) made of manganese oxide and a lead compound;
a container rest (150) provided at a lower side of the ionization container (100);
an ion water control part (310) which is installed inside of the container rest (150) for controlling the ionization electrode part (200);
a manipulation part (320) which is provided at the container rest (150) so as to input a user's operation signal to the ion water control part (310);
an electric power part which is disposed inside the container rest (150) and comprises a secondary battery configured to supply electric power to the ionization electrode part (200) in response to a control of the ion water control part (310).

## Patentansprüche

1. Wasserionisierungsvorrichtung, umfassend:
einen zylindrischen lonisierungsbehälter (100), der eine lonisierungskammer (110) umfasst, die ein vorbestimmtes Volumen zum Speichern von Rohwasser zur Ionisierung aufweist, wobei der lonisierungsbehälter (100) Folgendes aufweist: eine Auslassöffnung (120), deren Oberseite offen ist, um Rohwasser aufzunehmen und ionisiertes Wasser abzugeben, und die einen Deckel (121) aufweist; und ein zylindrisches Elektrodeninstallationsteil (132), das an einer äußeren Oberfläche der lonisierungskammer (100) bereitgestellt ist;
ein zylindrisches Ionisierungselektrodenteil (200), das in das zylindrische Elektrodeninstallationsteil (132) eingeführt ist und derart ausgebildet ist, dass eine Kathodenelektrode mit dem Rohwasser in direkten Kontakt kommen kann, wobei das lonisierungselektrodenteil (200) Folgendes umfasst:
eine lonentrennwand (210), die entweder aus einer Protonenaustauschmembran oder einer Polymerelektrolytmembran gebildet ist, die nur ionisierte Stoffe hindurchdurchlässt;
eine Rohwasser-Kontaktelektrode (220), die ausgelegt ist, mit einer Seite der lonentrennwand (210) in engen Kontakt zu kommen, und mit dem Rohwasser in Kontakt kommt, sodass die ionisierten Stoffe hindurchgelassen werden; und
eine extern freiliegende Elektrode (230), die ausgelegt ist, mit der lonentrennwand (210) auf der gegenüberliegenden Seite der Rohwasser-Kontaktelektrode (220) in engen Kontakt zu kommen, und extern freiliegend und derart ausgebildet ist, dass Sauerstoff und Ozon, die während des lonisierungsvorgangs erzeugt werden, hindurchgelassen werden, wobei die Rohwasser-Kontaktelektrode (220) und die extern freiliegende Elektrode (230) jeweils aus entweder einer netzförmigen Platte oder einer porösen Platte gebildet sind;
eine isolierte Beschichtungsschicht (231), die auf einer äußeren Oberfläche der extern freiliegenden Elektrode (230) beschichtet ist, um Oxidation und Leckstrom zu verhindern;
eine zylindrische Elektrodenabdeckung (142), die bereitgestellt ist, sodass eine äußere Oberfläche des lonisierungselektrodenteils (200), das mit dem zylindrischen Elektrodeninstallationsteil (132) gekoppelt ist, nicht freiliegt, wobei die zylindrische Elektrodenabdeckung (142) ein Lüftungsloch (143) für den Austritt von Gas aufweist;
eine Ozonabbaukammer (410), die im Inneren der zylindrischen Elektrodenabdeckung (142) auf der Seite der extern freiliegenden Elektrode (230) gebildet und konfiguriert ist, zu Sauerstoff abgebaut zu werden, wobei das Ozon über die extern freiliegende Elektrode (230) während eines lonisierungsvorgangs abgegeben wird, wobei die Ozonabbaukammer (410) ein Ozonabbaumittel aufweist, das aus einem Ozonabbaukatalysator (421) gebildet ist, der aus Manganoxid und einer Bleiverbindung hergestellt ist;
eine Behälterstütze (150), die auf einer unteren Seite des lonisierungsbehälters (100) bereitgestellt ist;
ein lonen-Wasser-Steuerteil (310), das im Inneren der Behälterstütze (150) zum Steuern des lonisierungselektrodenteils (200) installiert ist;
ein Verarbeitungsteil (320), das an der Behälterstütze (150) bereitgestellt ist, um ein Betriebssignal des Benutzers in das lonen-Wasser-Steuerteil (310) einzugeben;
ein Stromteil, das im Innern der Behälterstütze (150) angeordnet ist und eine sekundäre Batterie umfasst, die konfiguriert ist, dem lonisierungselektrodenteil (200) als Reaktion auf eine Steuerung des lonen-Wasser-Steuerteils (310) Strom zuzuführen.

## Revendications

1. Dispositif d'ionisation de l'eau, comprenant :
un récipient d'ionisation cylindrique (100) comprenant une chambre d'ionisation (110) qui a un volume prédéterminé pour le stockage de l'eau brute destinée à une ionisation, le récipient d'ionisation (100) ayant : un orifice de sortie (120) dont le sommet est ouvert pour recevoir l'eau brute et pour évacuer l'eau ionisée, et qui a un couvercle (121) ; et une partie d'installation d'électrode cylindrique (132) disposée sur une surface extérieure du récipient d'ionisation (100);
une partie d'électrode d'ionisation cylindrique (200) insérée dans la partie d'installation d'électrode cylindrique (132) et constituée de telle manière qu'une électrode de cathode peut entrer en contact direct avec l'eau brute, la partie d'électrode d'ionisation (200), comprenant :
une partition d'ions (210) qui est formée soit d'une membrane échangeuse de protons ou d'une membrane d'électrolyte polymère, qui permet uniquement à des substances ionisées de passer de manière traversante ;
une électrode (220) de contact avec l'eau brute qui est engagée pour venir en contact étroit avec un côté de la partition d'ions (210) et qui entrent en contact avec l'eau brute, en permettant ainsi aux substances ionisées de passer de manière traversante ; et
une électrode exposée extérieurement(230) qui est engagée à venir en contact étroit avec la partition d'ions (210) du côté opposé à l'électrode (220) de contact avec l'eau brute, est exposée extérieurement, et est constituée pour permettre à de l'oxygène et de l'ozone produits lors de la procédure d'ionisation de passer de manière traversante, l'électrode (220) de contact avec l'eau brute et l'électrode exposée extérieurement (230) étant chacune formée soit d'une plaque en forme de filet ou d'une de poreuse;
une couche de revêtement isolante (231) qui est appliquée en revêtement sur une surface externe de l'électrode exposée extérieurement (230) de manière à empêcher une oxydation et une fuite électrique ;
un couvercle d'électrode cylindrique (142) agencé de sorte qu'une surface extérieure de la partie d'électrode d'ionisation (200) couplée à la partie d'installation d'électrode cylindrique (132) ne soit pas exposée, le couvercle d'électrode cylindrique (142) comportant un trou de ventilation (143) pour l'échappement de gaz ;
une chambre de dégradation d'ozone (410) formée à l'intérieur du couvercle d'électrode cylindrique (142) du côté de l'électrode exposée extérieurement (230), et configuré pour dégrader dans de l'oxygène de l'ozone qui est déchargé via l'électrode exposée extérieurement (230) au cours d'une procédure d'ionisation, la chambre de dégradation d'ozone (410) ayant des moyens de dégradation d'ozone formés d'un catalyseur de décomposition d'ozone (421) constitué d'oxyde de manganèse et d'un composé du plomb,
un réservoir de repos (150) disposé au niveau d'un côté inférieur du récipient d'ionisation (100) ;
une partie de commande d'eau ionisée (310) qui est installée à l'intérieur du réservoir de repos (150) pour commander la partie d'électrode d'ionisation (200) ;
une partie de manipulation (320) qui est agencée au niveau du réservoir de repos (150) de façon à entrer un signal d'opération d'un utilisateur vers la partie de commande d'eau ionisée (310) ;
une partie d'alimentation électrique qui est disposée à l'intérieur du réservoir de repos (150), et qui comprend une batterie secondaire configurée pour alimenter du courant électrique vers la partie d'électrode d'ionisation (200) en réponse à une commande de la partie de commande d'eau ionisée (310).
